# EUROPÄISCHE PATENTSCHRIFT

(11) **EP 2 424 075 B1**
(45) Veröffentlichungstag und Bekanntmachung des Hinweises auf die Patenterteilung: **26.04.2017**
(21) Anmeldenummer: 11166314.2
(22) Anmeldetag: 17.05.2011
(51) Int. Cl.: H02J 13/00, H04L 12/28

(54) **Teilnehmer für ein Gebäudeinstallationssystem sowie Gebäudeinstallationssystem mit mehreren derartigen Teilnehmern**
Participant for a building installation system and building installation system with multiple such participants
Participants pour un système d'installation de bâtiment et système d'installation de bâtiment doté de tels participants

(30) Priorität: 27.08.2010 DE 102010037200
(43) Veröffentlichungstag der Anmeldung: 29.02.2012
(73) Patentinhaber: Insta GmbH, 58509 Lüdenscheid (DE)
(72) Erfinder: Scharbatke, Kai, 58515 Lüdenscheid (DE); Becker-Hennecke, Ralph, 58239 Schwerte (DE); Franzen, Michael, 58509 Lüdenscheid (DE); Piel, Jörg, 58579 Schalksmühle (DE); Bunte, Matthias, 42477 Radevormwald (DE)

(56) Entgegenhaltungen:
- EP-A1- 0 452 658
- EP-A2- 0 776 108
- EP-A2- 0 855 816
- EP-A2- 0 993 094
- DE-A1- 10 204 809
- DE-A1-102007 017 637
- DE-U1-202005 021 023

## Beschreibung

Eine Teilnehmer für ein mehrere, miteinander vernetzte Teilnehmer umfassendes Gebäudeinstallationssystem, welcher Teilnehmer ein Basismodul und einen Aufsatz umfasst, das Basismodul über eine Stromversorgung, ein Aktorteil und eine Schnittstelle zu dem Aufsatz und der Aufsatz über einen diesem zugeordneten Sensor und eine Schnittstelle zum Basismodul verfügt. Die Erfindung betrifft ferner ein Gebäudeinstallationssystem mit wenigstens einem Reiheneinbaugerät und mit mehreren, jeweils zumindest einen Aktor steuerenden und/oder einen Sensor auslesenden Teilnehmern.

Gebäudeinstallationssysteme dienen dem Zweck, unterschiedliche Installationen, wie Beleuchtung, Heizung, Belüftung und dergleichen datentechnisch miteinander zu vernetzen und je nach Auslegung des Systems unter Umständen auch mit der notwendigen Betriebsspannung zu versorgen. Die datentechnische Kommunikation wird typischerweise über ein Bussystem realisiert, an das die einzelnen Aktoren und/oder Sensoren der unterschiedlichen Installationen als Busteilnehmer angeschlossen sind. Ein solches Bussystem kann als Netzwerk angesprochen werden, bei dem eine Kommunikation über den Bus durch verschiedene Netzknoten erfolgt. Aufgrund der räumlich verteilten Anordnung der Teilnehmer werden derartige Gebäudeinstallationssysteme auch als verteilte Gebäudeinstallationssysteme bezeichnet.

Von einem solchen Busteilnehmer werden typischerweise ein oder mehrere Aktoren angesteuert oder ein oder mehrere Sensoren ausgelesen. Teil eines solchen Gebäudeinstallationssystems ist eine Steuereinheit, über die die Buskommunikation gesteuert wird. Derartige Gebäudeinstallationssysteme kommunizieren beispielsweise nach dem KNX-Standard.

Neben derartigen Gebäudeinstallationssystemen sind auch Reiheneinbaugeräte bekannt, umfassend einen Kopf und mehrere mehrkanalig ansteuerbare sogenannte Waggons. Die Kommunikation zwischen dem Kopf des Reiheneinbaugerätes und den Waggons erfolgt über einen Bus. Typischer Weise sind derartige Reiheneinbaugeräte in einem Schaltschrank verbaut und dienen als zentrale Schaltstelle in einem Gebäudeinstallationssystem.

Die Teilnehmer eines solchen Gebäudeinstallationssystems, die die Funktionalität einer Hauptstelle typischer Weise einnehmen, sind modulartig aufgebaut und umfassen ein Basismodul, üblicher Weise als Unterputz-Modul ausgeführt, und über einen Aufsatz. Dieses dient dem Zweck, dass ein und dasselbe Basismodul in Abhängigkeit von der von dem Teilnehmer auszuführenden Funktionalität mit einem für diese Funktionalität spezifischen Aufsatz ausgerüstet wird. Aufsatz und Basismodul sind diesbezüglich aufeinander abgestimmt. Der Aufsatz umfasst typischer Weise einen Sensor, beispielsweise einen Taster, während das Basismodul für die Funktionalitäten Aktorlogik und Aktorik zuständig ist. Die zum Steuern der Aktorik notwendige Auswertung des Sensorsignals und die Entscheidung über die Ansteuerung der Aktorik ist anteilig in beiden Modulen enthalten. Die Teilnehmer können untereinander vernetzt sein. In einem solchen Fall ist das diesbezügliche Kommunikationsmodul dem Basismodul zugeordnet.

EP 0 993 094 A2 offenbart ein elektrisches Installationssystem, bestehend aus einem Leitungseinsatz und einem Bedienaufsatz zum Erhalt eines Dimmers oder Schalters oder Jalousieschalters mit der Möglichkeit zum Anschluss einer oder mehrerer Nebenstellen. Der Einsatz umfasst einen Aktor, beispielsweise ein Relaisschalter und ist mit einer Kommunikationsfunktionalität mit der einen oder den mehreren Nebenstellen ausgestattet. Von den Nebenstellen empfangene Steuerbefehle werden im Einsatz dekodiert.

Gebäudeinstallationssysteme werden zunehmend hinsichtlich der Anzahl und der Funktionalität der Teilnehmer umfangreicher und komplexer. Es besteht daher der Wunsch nach einer prinzipiellen Vereinfachung der Systemteilnehmer, und zwar vor allem hinsichtlich einer Änderung und/oder einer Erweiterung des Gebäudeinstallationssystems aber auch in einer Ansteuerung und/oder Funktionalitätsprüfung der Teilnehmer.

Der Erfindung liegt daher die Aufgabe zugrunde, einen Teilnehmer für ein solches Gebäudeinstallationssystem vorzuschlagen, der diesen Anforderungen zumindest weitgehend genügt.

Gelöst wird diese Aufgabe durch einen eingangs genannten, gattungsgemäßen Teilnehmer, bei dem der Aufsatz und das Basismodul in einem Master-Slave-Verhältnis hinsichtlich der jeweils zugeordneten Funktionalitäten zueinander stehen, wobei der Aufsatz als Master und das Basismodul als Slave ausgeführt sind und wobei eine Funktionalität entweder ausschließlich dem Aufsatz oder dem Basismodul zugeordnet ist wobei der Aufsatz ein Kommunikationsmodul für eine Kommunikation innerhalb des Gebäudeinstallationssystems umfasst.

Gelöst wird diese Aufgabe ferner durch ein eingangs genanntes, gattungsgemäßes Gebäudeinstallationssystem, bei dem zwischen dem Reiheneinbaugerät und den Teilnehmern eine Kommunikationsverbindung besteht und zumindest einige der Teilnehmer Teilnehmer mit den Merkmalen des vorstehend beschriebenen Teilnehmers sind und die Funktionalitäten in diesen Teilnehmern jeweils identisch auf den Aufsatz und das Basismodul aufgeteilt sind.

Im Vordergrund steht bei diesem Teilnehmer die klare und eindeutige Trennung der dem Aufsatz bzw. dem Basismodul zugeordneten Funktionalitäten. Eine Funktionalität ist also entweder dem Aufsatz oder dem Basismodul zugeordnet. Dieses ermöglicht die Ausgestaltung eines solchen Teilnehmers, dass Aufsatz und Basismodul in einem definierten Master-Slave-Verhältnis zueinander stehen, wobei der Aufsatz der Master und das Basismodul der Slave sind. Dieses erlaubt, dass quasi ein beliebiges Basismodul mit einem beliebigen Aufsatz verheiratet werden kann, ohne dass beide Module bis auf eine gemeinsame Schnittstelle vorher aufeinander in besonderer Weise abgestimmt sein müssten. Das Verheiraten erfolgt bei einer ersten Inbetriebnahme durch einen so genannten Handshake, bei dem der Aufsatz die Information von dem Basismodul über die Art und/oder Funktionalität desselben erhält. Die hinsichtlich ihrer Aktorik/Sensorik unterschiedlichen Basismodule können sodann mit identischen Aufsätzen ausgerüstet werden. Bei dem dem Basismodul zugeordneten Aktorteil kann es sich um eine beliebige Funktionalität handeln, die durch den dem Basismodul zugeordneten Aufsatz ansteuerbar ist. Somit kann es sich bei einem solchen Aktorteil beispielsweise um ein Relais zum Schalten eines Aktors, um einen Sensor oder auch um eine andere Funktionalität, wie beispielsweise ein Funkmodul handeln.

Die eindeutige Aufteilung der Funktionalitäten eines solchen Teilnehmers auf den Aufsatz und auf das diesem zugeordnete Basismodul erlaubt eine Ausgestaltung von Teilnehmern, die unterschiedliche Ausbaustufen aufweisen können. Hinsichtlich seiner Funktionalität weist jeder Teilnehmer ein hinsichtlich seiner Mindestfunktionalitäten gleiches Basismodul auf. Die darüber hinausgehende Unterscheidung hinsichtlich der Ausbaustufe der mit dem Teilnehmer zu realisierenden Funktionalitäten ist sodann ausschließlich abhängig von dem jeweils verwendeten Aufsatz. Eine Änderung des Basismoduls und seiner Verkabelung ist dazu nicht erforderlich. Unterschiedliche Ausbaustufen eines solchen Teilnehmers können sich beispielsweise durch einen unvernetzten oder einen vernetzten Einsatz des Teilnehmers ergeben. Zum Aufrüsten eines beispielsweise zunächst unvernetzten Teilnehmers zu einem Vernetzten wird sodann allein der Aufsatz ausgetauscht, und zwar durch einen mit einem Kommunikationsmodul, welches vorzugsweise drahtlos, insbesondere auf einer Funkstrecke arbeitet.

Vorteile einer solchen Ausgestaltung der Teilnehmer ergeben sich nicht nur teilnehmerbezogen, sondern auch im Hinblick auf die Gesamtheit des Gebäudeinstallationssystems, welches zumindest mehrere derartiger Teilnehmer umfasst. Vor dem Hintergrund, dass diese Teilnehmer alle hinsichtlich ihrer Funktionalitätenaufteilung auf Aufsatz und Basismodul gleich konzipiert sind und das für die Kommunikation untereinander jeweils benötigte Kommunikationsmodul Teil des Aufsatzes ist, ist eine Steuerung der Kommunikation innerhalb des Netzwerkes unter Berücksichtigung vorgegebener Prioritäten ohne Beeinflussung der dem Basismodul zugeordneten Funktionalitäten bzw. ohne Beeinträchtigung der dem Basismodul zugeordneten Ressourcen möglich. Zudem ist eine Kommunikation mit diesen Teilnehmern, wozu ebenfalls eine Funktionalitätsüberprüfung zählt, möglich.

Gebäudeinstallationssysteme verfügen typischer Weise über ein oder mehrere Reiheneinbaugeräte, umfassend jeweils einen Kopf als Master und mehrere daran über eine bestimmte Bustopologie angeschlossene Waggons als Slaves. Gemäß einem bevorzugten Ausführungsbeispiel sind die Funktionalitäten der Teilnehmer des Gebäudeinstallationssystems auf den Aufsatz und das Basismodul genauso aufgeteilt wie die Funktionalitätenteilung innerhalb des Reiheneinbaugerätes auf den Kopf und die Waggons. In einem solchen Fall ist es ohne weiteres möglich, die Teilnehmer und das Reiheneinbaugerät in einem gemeinsamen Netzwerk zu betreiben. Eine solche Ausgestaltung ermöglichst zudem grundsätzlich die Verwendung eines Waggons eines Reiheneinbaugerätes als Basismodul eines Teilnehmers und umgekehrt.

Weitere Vorteile und weitere Ausgestaltungen der Erfindung ergeben sich aus der nachfolgenden Beschreibung eines Ausführungsbeispiels unter Bezugnahme auf die beigefügten Figuren. Es zeigen:

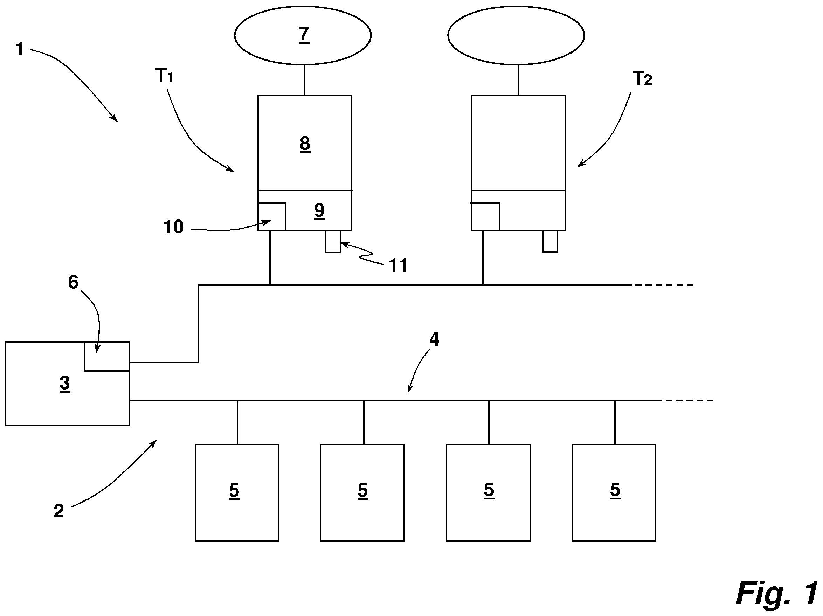

- **Fig.1:**: In einer vereinfachten Darstellung nach Art eines Blockschaltbildes ein Gebäudeinstallationssystem mit einem Reiheneinbaugerät und mehreren Teilnehmern,
- **Fig. 2:**: Ein Diagramm zum Darstellen der Aufteilung der Funktionalitäten der Teilnehmers des Gebäudeinstallationssystems der Figur 1 und
- **Fig. 3:**: Eine Darstellung des Gebäudeinstallationssystems der Figur 1 in einer modifizierten Ausgestaltung.

Eine Gebäudeinstallationssystem 1 umfasst ein Reiheneinbaugerät 2. Das Reiheneinbaugerät verfügt über einen Kopf 3 als Steuergerät und mehrere daran über einen Bus 4 angeschlossene Waggons 5 als Busteilnehmer. Das Reiheneinbaugerät 2 ist hinsichtlich seines Kopfes 3 und der Waggons 5 als Master-Slave-System konzipiert, wobei der Kopf 3 der Master und die Waggons 5 jeweils Slaves sind. Der Kopf 3 dient zum Ansteuern der über den Bus 4 angeschlossenen Waggons 5. Zusätzlich verfügt der Kopf 3 über ein Kommunikationsmodul 6. Bei den Waggons 5 handelt es sich um an den Bus 4 angeschlossene Busteilnehmer konzipiert als Aktoren und/oder Sensoren.

Dem Gebäudeinstallationssystem 1 zugehörig sind ferner mehrere Teilnehmer T₁, T₂, ..., die für sich genommen jeweils eine Hauptstelle in dem Gebäudeinstallationssystem 1 bilden. Hauptstellen sind solche Stellen im Netzwerk, durch die jeweils ein Aktor angesteuert und/oder ein Sensor ausgelesen werden kann. Angeschlossen sein können an jeden Teilnehmer T₁, T₂, ... jeweils ein oder mehrere Nebenstellen, durch die sodann der an einen solchen Teilnehmer T₁, T₂, ... angeschlossene Aktor ebenfalls bedient werden kann. Somit kann eine Ansteuerung des Aktors sowohl von der Hauptstelle als auch durch eine daran angeschlossene Nebenstelle erfolgen. Möglich ist es auch, dass ein solcher Aktor nur von einer Nebenstelle angesteuert werden kann.

Nachfolgend ist der Teilnehmer T₁ näher beschrieben. Die weiteren Teilnehmer T₂, ... des Gebäudeinstallationssystems 1 sind entsprechend aufgebaut. Der Teilnehmer T₁ dient beispielsweise zum Ansteuern einer Beleuchtungseinrichtung in einem Raum des Gebäudes, in dem das Gebäudeinstallationssystem 1 integriert ist. Die Beleuchtungseinrichtung bildet sodann den Aktor 7 des Teilnehmers T₁. Der Teilnehmer T₁ besteht aus einem Basismodul 8 und einem Aufsatz 9. Das Basismodul 8 ist als Unterputzmodul ausgeführt und lässt sich wand- oder deckenseitig mittels eines üblichen Einbaurahmens montieren. Das Basismodul umfasst eine Stromversorgung, gegebenenfalls einen oder mehrere Nebenstelleneingänge, einen Mikroprozessor als Steuereinheit, ein Relais als Aktorteil zum Schalten des Aktors 7 sowie eine Kommunikationsschnittstelle zu dem Aufsatz 9. Der Aufsatz 9 verfügt über eine zu der Kommunikationsschnittstelle des Basismoduls 8 komplementäre Schnittstelle, über einen Sensor und über ein Kommunikationsmodul 10. Der Teilnehmer T₁ arbeitete ebenso wie das Reiheneinbaugerät 2 in einem Verhältnis seines Aufsatzes 9 zu dem Basismodul 9 in einem Master-Slave-Verhältnis, wobei der Aufsatz 9 den Master und das Basismodul 8 den Slave darstellt. Der Aufsatz 9 ist zuständig für die Generierung bzw. den Empfang eines Sensorsignals, dessen Auswertung und für die Steuerlogik. Da bei dem dargestellten Ausführungsbeispiel der Teilnehmer T₁ zusätzlich das Kommunikationsmodul 10 umfasst, kommt dem Aufsatz 9 zusätzlich die Funktionalität einer Kommunikation mit dem Reiheneinbaugerät 2 und den weiteren Teilnehmern T₂, ... des Gebäudeinstallationssystems 1 zu.

Der Aufsatz 9 ist von dem Basismodul 8 ohne Weiteres entfernbar und kann durch einen anderen Aufsatz auch mit anderen Funktionalitäten ersetzt werden. Der Aufsatz 9 und das Basismodul 8 sind dergestalt über die zusammenwirkenden Schnittstellen miteinander verbunden, dass durch eine erste Inbetriebnahme im Wege eines so genanntes Handshake der Aufsatz 9 erfährt, um welches Funktionalität es sich bei dem Basismodul 8 handelt und welche Art von Aktor von dem Teilnehmer T₁ angesteuert wird. Die Stromversorgung des Aufsatzes 9 erfolgt über die in dem Basismodul 8 integrierte Stromversorgung und die genannte Schnittstelle. Als Sensor verfügt bei dem dargestellten Ausführungsbeispiel der Aufsatz 9 über einen Taster 11, über den der Aktor 7 geschaltet werden kann. Bei dem Aufsatz 9 handelt es sich bei dem dargestellten Ausführungsbeispiel um einen Dimmaufsatz, sodass durch entsprechende Tasterbetätigung der Aktor 11 hinsichtlich der von ihm angegebenen Helligkeit angesteuert werden kann.

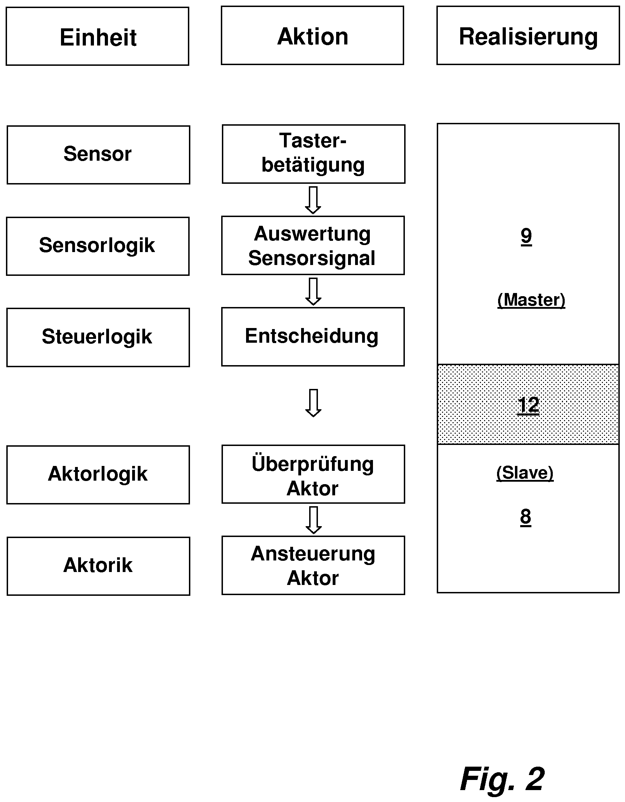

Figur 2 verdeutlicht die Zuweisung der Funktionalitäten des Teilnehmers T₁ und Aufteilung derselben auf den Aufsatz 9 und das Basismodul 8. Der Aufsatz verfügt als Funktionalitätseinheiten für die Aktorsteuerung über einen Sensor, eine Sensorlogik sowie eine Steuerlogik. Bei dem Sensor handelt es sich um den Taster 11. Über die Sensorlogik wird das Betätigungssignal des Tasters 11 ausgewertet, wobei bei dem dargestellten Ausführungsbeispiel die Länge einer Tasterbetätigung ausgewertet wird. Die Steuerlogik wiederum ist verantwortlich, zu entscheiden, ob und in welcher Form der Aktor 7 angesteuert werden soll. Neben diesen zur Ansteuerung des Aktors 7 vorgesehenen Funktionalitäten verfügt der als Master konzipierte Aufsatz 9 des dargestellten Ausführungsbeispiels zusätzlich noch über das Kommunikationsmodul 10 zum Zwecke einer Kommunikation mit dem Reiheneinbaugerät 2 und anderen Teilnehmern T₂, ...(in Figur 2 nicht dargestellt).

Dem Basismodul 8 ist für die Zwecke der Ansteuerung des Aktors 7 eine Aktorlogik als Funktionalität sowie eine Aktorik als weitere Funktionalität zugeordnet. Durch die Aktorlogik wird der Aktor 7 hinsichtlich seines aktuellen Status überprüft. Mit der Aktorik wird der Aktor 7 aktiv angesteuert. Als Aktorik kann beispielsweise ein Relais als Schaltglied vorgesehen sein. Zwischen dem Aufsatz 9 (Master) und dem Basismodul 8 (Slave) ist die bereits vorstehend beschriebene Schnittstelle 12 angeordnet.

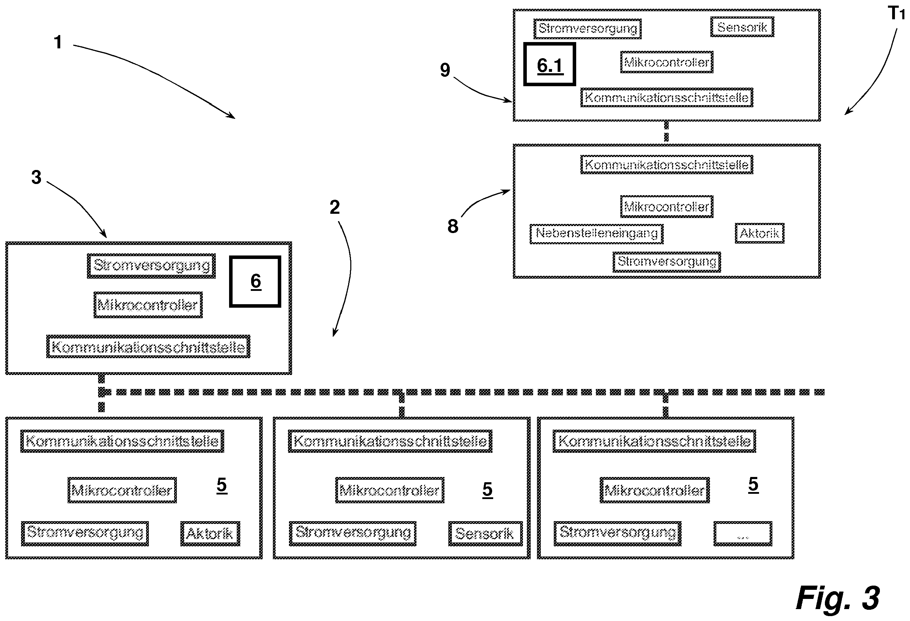

Die Funktionalitätenaufteilung in dem Reiheneinbaugerät 2 entspricht derjenigen des Teilnehmers T₁ sowie der weiteren Teilnehmer T₂,..., sodass der Kopf 3 die Funktionalitäten des Aufsatzes 9 und die Waggons die Funktionalitäten des Basismoduls 8 ausführen können. Der gleiche Aufbau des Kopfes 3 des Reiheneinbaugerätes 2 hinsichtlich seiner Funktionalitäten mit demjenigen des Aufsatzes 9 eines Teilnehmers T₁, T₂, ... sowie der hinsichtlich der Funktionalitäten gleiche Aufbau zwischen den Waggons 5 und dem Basismodul 8 der Teilnehmer T₁, T₂, ... ist in Figur 3 entnehmbar. Bei den vorgenannten Funktionalitäten handelt es sich um die Mindestfunktionalitäten, was nicht ausschließt, dass das jeweilige Bauteil über die dargestellten Funktionalitäten nicht weitere Funktionalitäten aufweisen kann. Infolge der Abhängigkeit der Funktionalitäten des Basismoduls 8 von dem übergeordneten Steuermodul - dem Aufsatz 9 - kann eine Kommunikation zwischen den Teilnehmern T₁, T₂, ... und dem Reiheneinbaugerät oder umgekehrt in Abhängigkeit von bestimmten Prioritäten, die durch die in dem Aufsatz 9 enthaltene Logik bereitgestellt sind, erfolgen.

In Figur 3 ist das Gebäudeinstallationssystem in einer alternativen Ausgestaltung gezeigt, bei der die Kommunikation zwischen den Teilnehmern T₁, T₂, ... und dem Reiheneinbaugerät 2 auf einer Funkstrecke erfolgt. Daher ist das Kommunikationsmodul 6 bei dem Kopf 3 des Reiheneinbaugerätes 2 der Figur 3 ein Funkmodul. Gleichfalls weisen die Teilnehmer T₁, T₂, ... ein Kommunikationsmodul 6.1 auf, welches gleichfalls als Funkmodul konzipiert ist.

Die Kommunikation zwischen den Teilnehmern T₁, T₂, ... untereinander und dem Reiheneinbaugerät 2 kann drahtgebunden oder auch drahtlos, beispielsweise auf einer Funkstrecke erfolgen. Die Vernetzung der Teilnehmer T₁, T₂, ... in dem Gebäudeinstallationssystem 1 unter Implementierung des Kopfes 3 des Reiheneinbaugerätes 2 kann genutzt werden, damit von dem Kopf 3 des Reiheneinbaugerätes 2 auf die einzelnen Teilnehmer T₁, T₂, ... bzw. deren Aufsätze 9 zugegriffen werden kann. Somit kann über den Kopf 3 des Reiheneinbaugerätes 2 der Teilnehmer T₁ oder auch jeder andere Teilnehmer T₂, ... eingerichtet werden, was neben der Kommunikationsverbindung deshalb ohne Weiteres möglich ist, da sämtliche Teilnehmer T₁, T₂, ... des Gebäudeinstallationssystems 1 hinsichtlich ihrer Funktionalitätenaufteilung im Aufsatz 9 und im Basismodul 8 gleich konzipiert sind. Dieser strukturell gleiche Aufbau der Teilnehmer T₁, T₂, ... erlaubt einen problemlosen Aufbau eines Gebäudeinstallationssystems, beispielsweise mit unterschiedlichen Basismodulen, auf die zur Inbetriebnahme derselben jeweils ein einheitlicher Aufsatz aufgesteckt wird. Die vorstehende Beschreibung des Gebäudeinstallationssystems 1 macht deutlich, dass bei der Kommunikation der jeweilige Master - Aufsatz 9 oder Kopf 3 - adressiert wird.

Die Beschreibung der Erfindung macht deutlich, dass in hohem Maße die Systemfunktionalitäten von zusammengesetzten Geräten - einem Reiheneinbaugerät und Teilnehmern eines Gebäudeinstallationssystems - vereinheitlicht sind. Neben den bereits genannten Vorteilen ergeben sich ebenfalls Vorteile darin, dass selbst zum Ausbilden komplexer Gebäudeinstallationssysteme auf eine kleine Anzahl von unterschiedlichen Basismodulen und Aufsätzen zurückgegriffen werden kann. Durch das beschriebene Master-Slave-Verhältnis der zusammengesetzten Geräte ist es nicht erforderlich, dass der jeweilige Slave Kenntnis davon hat, in welches System - Reiheneinbaugerät oder Teilnehmer - er eingebaut ist. Infolge dessen ist der Entwicklungsaufwand zum Bereitstellen von unterschiedlichen Basismodulen oder Waggons als Slaves nicht unerheblich reduziert.

Da die Kommunikation zwischen den Einheiten eines solchen Gebäudeinstallationssystems über den jeweiligen Master erfolgt, sind Kommunikationsentscheidungen auf eine klar definierte Instanz - hier: die Master - reduziert.

### Bezugszeichenliste

- 1: Gebäudeinstallationssystem
- 2: Reiheneinbaugerät
- 3: Kopf
- 4: Bus
- 5: Waggon
- 6,6.1: Kommunikationsmodul
- 7: Aktor
- 8: Basismodul
- 9: Aufsatz
- 10: Kommunikationsmodul
- 11: Taster
- 12: Schnittstelle
- T₁, T₂: Teilnehmer

## Patentansprüche

1. Teilnehmer für ein mehrere, miteinander vernetzte Teilnehmer umfassendes Gebäudeinstallationssystem (1), welcher Teilnehmer (T₁, T₂, ...) ein Basismodul (8) und einen Aufsatz (9) umfasst, wobei das Basismodul (8) über eine Stromversorgung, ein Aktorteil und eine Schnittstelle zu dem Aufsatz (9) und der Aufsatz (9) über einen diesem zugeordneten Sensor (11) und eine Schnittstelle zum Basismodul (8) verfügt, **dadurch gekennzeichnet, dass** der Aufsatz (9) und das Basismodul (8) in einem Master-Slave-Verhältnis hinsichtlich der jeweils zugeordneten Funktionalitäten zueinander stehen, wobei der Aufsatz (9) als Master und das Basismodul (8) als Slave ausgeführt sind und wobei eine Funktionalität entweder ausschließlich dem Aufsatz (9) oder dem Basismodul (8) zugeordnet ist, wobei der Aufsatz (9) ein Kommunikationsmodul (10) für eine Kommunikation innerhalb des Gebäudeinstallationssystems umfasst.

2. Teilnehmer nach Anspruch 1, **dadurch gekennzeichnet, dass** dem als Master ausgeführten Aufsatz (9) die Funktionalitäten: Sensor, Sensorlogik und Steuerlogik und dem als Slave ausgeführten Basismodul (8) die Funktionalitäten: Aktorlogik und Aktorik zugeordnet sind.

3. Teilnehmer nach Anspruch 1 oder 2, **dadurch gekennzeichnet, dass** das Basismodul (8) 1- oder 2-kanalig ansteuerbar ist.

4. Gebäudeinstallationssystem mit wenigstens einem Reiheneinbaugerät (2) und mit mehreren, jeweils zumindest einen Aktor steuerenden und/oder einen Sensor auslesenden Teilnehmern (T₁, T₂, ...), **dadurch gekennzeichnet, dass** zwischen dem Reiheneinbaugerät (2) und den Teilnehmern (T₁, T₂, ...) eine Kommunikationsverbindung besteht und zumindest einige der Teilnehmer (T₁, T₂, ...) Teilnehmer mit den Merkmalen nach einem der Ansprüche 1 bis 3 sind und die Funktionalitäten in diesen Teilnehmern (T₁, T₂, ...) jeweils identisch auf den Aufsatz (9) und das Basismodul (8) aufgeteilt sind.

5. Gebäudeinstallationssystem nach Anspruch 4, **dadurch gekennzeichnet, dass** alle Teilnehmer (T₁, T₂, ...) Teilnehmer mit Merkmalen nach einem der Ansprüche 1 bis 3 sind.

6. Gebäudeinstallationssystem nach Anspruch 4 oder 5, **dadurch gekennzeichnet, dass** die Aufteilung der Funktionalitäten in den Teilnehmern (T₁, T₂, ...) auf den Aufsatz (9) und das Basismodul (8) der Aufteilung der Funktionalitäten zwischen einem dem Reiheneinbaugerät (2) zugeordneten Kopf (3) als Master und den dem Reiheneinbaugerät (2) zugeordneten Waggons (5) als Slaves entspricht.

## Claims

1. Network component for a building installation system (1) comprising several interlinked components, which component (T₁, T₂, ...) comprises a basic module (8) and a top-piece (9), wherein the basic module (8) provides a power supply, an actuator and an interface to the top-piece (9) and the top-piece (9) provides a sensor (11) assigned to this top-piece and an interface to the basic module (8), **characterized by the fact** that the top-piece (9) and the basic module (8) are in a master-slave-relationship with regard to the relevant assigned functionalities, wherein the top-piece (9) is designed as master and the basic module (8) as slave and wherein a functionality is either assigned exclusively to the top-piece (9) or to the basic module (8), wherein the top-piece (9) comprises a communication module (10) for communication within the building installation system.

2. Network component in accordance with Claim 1, **characterized by the fact** that the functionalities sensor, sensor logics and control logics are assigned to the top-piece (9) designed as master and the functionalities actuator logics and actuator technology are assigned to the basic module (8) designed as slave.

3. Network component in accordance with Claim 1 or 2, **characterized by the fact** that the basic module (8) can be controlled via 1 or 2 channels.

4. Building installation system with at least one rail-mounted device (2) and with several network components (T₁, T₂, ...), controlling at least one actuator and/or reading at least one sensor, **characterized by the fact** that there is a communication link between the rail-mounted device (2) and the network components (T₁, T₂, ...) and at least some of the network components (T₁, T₂, ...) are components with the features according to any of Claims 1 to 3 and that the functionalities in these network components (T₁, T₂, ...) each are distributed evenly to the top-piece (9) and the basic module (8).

5. Building installation system in accordance with Claim 4, **characterized by the fact** that all network components (T₁, T₂, ...) are components with features according to any of Claims 1 to 3.

6. Building installation system in accordance with Claims 4 or 5, **characterized by the fact** that the distribution of the functionalities in the network components (T₁, T₂, ...) to the top-piece (9) and the basic module (8) corresponds to the distribution of the functionalities between a head (3) assigned to the rail-mounted device (2) as master and the wagons (5) assigned to the rail-mounted device (2) as slaves.

## Revendications

1. Abonné pour un système d'installations électriques (1) comprenant plusieurs abonnés en réseau, lequel abonné (T₁, T₂, ...) comprend un module de base (8) et une garniture (9), le module de base (8) disposant d'une alimentation en courant, d'un élément acteur et d'une interface avec la garniture (9) et la garniture (9) d'un capteur (11) attribué à cette dernière ainsi que d'une interface avec le module de base (8), **caractérisé en ce que** la garniture (9) et le module de base (8) ont des rapports maître-esclave en ce qui concerne les fonctionnalités respectives attribuées, la garniture (9) étant réalisée en tant que maître et le module de base (8) en tant qu'esclave et une fonctionnalité étant attribuée soit exclusivement à la garniture (9) soit au module de base (8), la garniture (9) comprenant un module de communication (10) pour une communication au sein du système d'installations électriques.

2. Abonné selon la revendication 1, **caractérisé en ce que** les fonctionnalités :
capteur, logique de capteur et logique de commande sont attribuées à la garniture (9) réalisée en tant que maître et les fonctionnalités : logique actionneur et actionneur sont attribuées au module de base (8) réalisé en tant qu'esclave.

3. Abonné selon la revendication 1 ou 2, **caractérisé en ce que** le module de base (8) est interrogeable sur 1 canal ou 2 canaux.

4. Système d'installations électriques ayant au moins un appareil intégré en série (2) et plusieurs abonnées (T₁, T₂, ...) commandant au moins un acteur et/ou relevant un capteur, **caractérisé en ce qu**'une liaison de communication est en place entre l'appareil intégré en série (2) et les abonnés (T₁, T₂, ...) et qu'au moins quelques-uns des abonnés (T₁, T₂, ...) présentent les caractéristiques selon l'une des revendications 1 à 3 et que les fonctionnalités sont distribuées de manière identique respectivement sur la garniture (9) et le module de base (8) dans ses abonnés (T₁, T₂, ...).

5. Système d'installations électriques selon la revendication 4, **caractérisé en ce que** tous les abonnés (T₁, T₂, ...) sont des abonnés ayant les caractéristiques selon l'une quelconques des revendications 1 à 3.

6. Système d'installations électriques selon la revendication 4 ou 5, **caractérisé en ce que** la distribution des fonctionnalités dans les abonnés (T₁, T₂, ...) sur la garniture (9) et le module de base (8) correspond à la répartition des fonctionnalités entre une tête (3) attribuée à l'appareil intégré en série (2) en tant que maître et aux wagons (5) attribués à l'appareil intégré en série (2) en tant qu'esclave.
